(19) Europäisches Patentamt
European Patent Office
Office européen des brevets

(11) **EP 4 815 561 A1**

(12) **EUROPEAN PATENT APPLICATION**
published in accordance with Art. 153(4) EPC

(43) Date of publication:
**30.09.2026 Bulletin 2026/40**

(21) Application number: **23959179.5**

(22) Date of filing: **22.11.2023**

(51) International Patent Classification (IPC):
***H04W 36/08*** *(2009.01)*

(52) Cooperative Patent Classification (CPC):
**H04W 36/08;** Y02D 30/70

(86) International application number:
**PCT/CN2023/133407**

(87) International publication number:
**WO 2025/107205 (30.05.2025 Gazette 2025/22)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **GUANGDONG OPPO MOBILE TELECOMMUNICATIONS CORP., LTD.**
**Dongguan, Guangdong 523860 (CN)**

(72) Inventor: **LI, Haitao**
**Dongguan, Guangdong 523860 (CN)**

(74) Representative: **Penza, Giancarlo**
**Bugnion S.p.A.**
**Viale Lancetti, 17**
**20158 Milano (IT)**

# (54) CELL SELECTION OR RESELECTION METHOD, AND DEVICE AND STORAGE MEDIUM

(57) Provided are methods of cell selection or reselection, devices, and a storage medium. The method includes: a terminal device receiving a first parameter configured by a network device, wherein the first parameter is used for performing selection or reselection of a first target cell, and the first target cell is related to a low power wake-up signal (LP-WUS).

A terminal device receives a first parameter configured by a network device, the first parameter being used for selecting or reselecting a first target cell, the first target cell being related to an LP-WUS

S401

**FIG. 4**

EP 4 815 561 A1

## Description

TECHNICAL FIELD

Embodiments of the present disclosure relate to the technical field of mobile communications, in particular to methods of cell selection or reselection and devices, and a storage medium.

BACKGROUND

In a New Radio (NR) system, a low power Wake-up Signal (LP-WUS) is introduced. A terminal device uses a lower power receiver to receive the LP-WUS, and starts a primary receiver to monitor a downlink signal after receiving the LP-WUS, so as to achieve the purpose of energy saving.

After the introduction of LP-WUS, from the perspective of a terminal device, compared with camping in an ordinary cell, a primary receiver can be turned off when the terminal device stays in a cell supporting the LP-WUS, so that a better power-saving effect is achieved. However, the LP-WUS cannot cover the entire cell, that is, when the terminal device is in a poor coverage of a serving cell, it will not be able to receive the LP-WUS, and the terminal device have to turn on the primary receiver to monitor a downlink message. In this case, the terminal device cannot achieve the purpose of saving power and energy by using the LP-WUS.

SUMMARY

Embodiments of the present disclosure provide methods of cell selection or reselection and devices, and a storage medium.

A method of cell selection or reselection according to the embodiment of the present disclosure includes that: a terminal device receives a first parameter configured by a network device, the first parameter being used for selecting or reselecting a first target cell, the first target cell being related to an LP-WUS.

A method of cell selection or reselection according to an embodiment of the present disclosure includes that: a network device configures a first parameter to a terminal device, the first parameter being used for selecting or reselecting a first target cell, the first target cell being related to an LP-WUS.

A terminal device according to an embodiment of the present disclosure includes:
a first communication unit, configured to receive a first parameter configured by a network device, the first parameter being used for selecting or reselecting a first target cell, the first target cell being related to an LP-WUS.

A network device according to the embodiment of an present disclosure includes:
a second communication unit, configured to configure, to a terminal device, a first parameter for selecting or reselecting a first target cell, the first target cell being related to an LP-WUS.

A communication device provided by an embodiment of the present disclosure may be the terminal device or the network device according to the above schemes, and the communication device includes a processor and a memory. The memory is configured to store a computer program, and the processor is configured to call and run the computer program stored in the memory to perform the methods of cell selection or reselection as described above.

A chip provided by an embodiment of the present disclosure is used to implement the methods of cell selection or reselection as described above.

Specifically, the chip includes a processor for calling and running a computer program from a memory to cause a device on which the chip is mounted to perform the methods of cell selection or reselection as described above.

A computer-readable storage medium provided by an embodiment of the present disclosure is used for storing a computer program that causes a computer to execute the methods of cell selection or reselection as described above.

A computer program product provided by an embodiment of the present disclosure includes computer program instructions that cause a computer to execute the methods of cell selection or reselection as described above.

A computer program provided by an embodiment of the present disclosure may cause a computer to execute the above-described methods of cell selection or reselection when running on the computer.

According to the above technical solution, a network device may configure a first parameter for an LP-WUS to a terminal device, and the terminal device can perform cell selection or reselection based on the configured first parameter to obtain a first target cell considering the LP-WUS, thereby ensuring that the cell in which the terminal device camps uses the LP-WUS, reducing power consumption of the terminal device and achieving the purpose of saving power and energy.

BRIEF DESCRIPTION OF THE DRAWINGS

The accompanying drawings described herein are intended to provide a further understanding of the present disclosure, and constitute a part of the present disclosure. The schematic embodiments of the present disclosure and the

description thereof are intended to explain the present disclosure, and do not constitute an undue limitation of the present disclosure. In the drawings:

FIG. 1 is a schematic diagram of an application scenario according to an embodiment of the present disclosure;
FIG. 2 is a schematic diagram of optional transmission of the LP-WUS according to an embodiment of the present disclosure;
FIG. 3 is a schematic diagram of optional transmission of the LP-WUS according to an embodiment of the present disclosure;
FIG. 4 is an optional flow diagram of a method of cell selection or reselection according to an embodiment of the present disclosure;
FIG. 5 is an optional flow diagram of a method of cell selection or reselection according to an embodiment of the present disclosure;
FIG. 6 is an optional flow diagram of a method of cell selection or reselection according to an embodiment of the present disclosure;
FIG. 7 is an optional flow diagram of a method of cell selection or reselection according to an embodiment of the present disclosure;
FIG. 8 is an optional flow diagram of a method of cell selection or reselection according to an embodiment of the present disclosure;
FIG. 9 is an optional schematic structural diagram of a terminal device according to an embodiment of the present disclosure;
FIG. 10 is an optional schematic structural diagram of a network device according to an embodiment of the present disclosure;
FIG. 11 is a schematic structural diagram of a communication device according to an embodiment of the present disclosure;
FIG. 12 is a schematic structural diagram of a chip according to an embodiment of the present disclosure; and
FIG. 13 is a schematic block diagram of a communication system according to an embodiment of the present disclosure.

DETAILED DESCRIPTION

The technical solutions in the embodiments of the present disclosure will be described with reference to the accompanying drawings in the embodiments of the present disclosure. The described embodiments are part of the embodiments of the present disclosure, but not all the embodiments. Based on the embodiments in the present disclosure, all other embodiments obtained by those skilled in the art without creative work shall fall within the scope of protection of the present disclosure.

The scenarios of a communication system include Terrestrial Network (TN) and NTN. The NTN generally provides communication services to terrestrial users by means of satellite communication. Current NTN systems include NR-NTN and IoT-NTN systems, and may further include other NTN systems in the future.

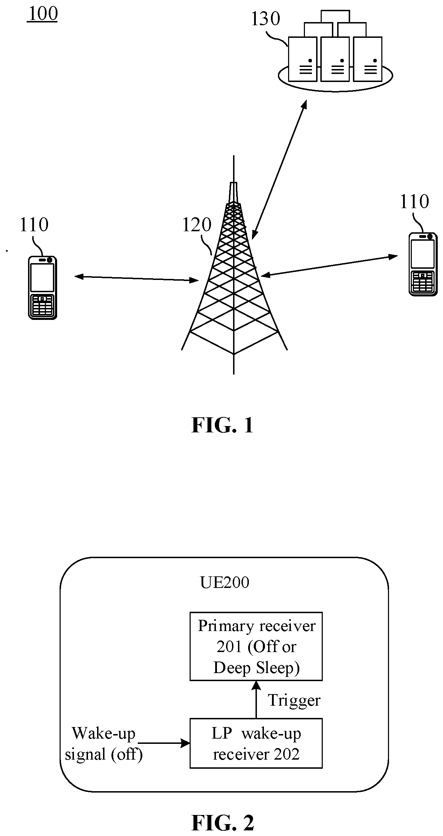

FIG. 1 is a schematic architecture diagram of a communication system according to an embodiment of the present disclosure. As shown in FIG. 1, the communication system 100 may include a terminal device 110 and a network device 120. The network device 120 may communicate with the terminal device 110 through an air interface. Multi-service transmission is supported between the terminal device 110 and the network device 120.

It should be understood that the embodiments of the present disclosure are only illustrated with reference to the communication system 100, but the embodiments of the present disclosure are not limited thereto. That is, the technical solution of the embodiments of the present disclosure can be applied to various communication systems, such as a Long Term Evolution (LTE) system, an LTE Time Division Duplex (TDD), a Universal Mobile Telecommunication System (UMTS), an Internet of Things (IoT) system, and a Narrow Band Internet of Things (NB-IoT) system, an enhanced Machine-Type Communications (eMTC) system, a 5G communication system (also referred to as a New Radio (NR) communication system), or future communication systems, etc.

In the communication system 100 illustrated in FIG. 1, the network device 120 may be an access network device that may communicate with the terminal device 110. An access network device may provide communication coverage for a particular geographic area and may communicate with the terminal device 110 (e.g., UE) located within that coverage area.

The network device 120 may be an Evolutionary Node B (eNB, or eNodeB) in a Long Term Evolution (LTE) system, a Next Generation Radio Access Network (NG RAN) device, a base station (gNB) in an NR system, a radio controller in a Cloud Radio Access Network (CRAN), or a relay station, an access point, an in-vehicle device, a wearable device, a hub, a switch, a bridge, a router, or a network device in a future evolved Public Land Mobile Network (PLMN), and so on.

The terminal device 110 may be any terminal device including, but not limited to, a terminal device that has a wired or wireless connection with the network device 120 or other terminal devices.

For example, the terminal device 110 may refer to an access terminal, User Equipment (UE), a subscriber unit, a subscriber station, a mobile station, a mobile site, a remote station, a remote terminal, a mobile device, a user terminal, a terminal, a wireless communication device, a user agent, or a user apparatus. The access terminal may be a cellular telephone, a cordless telephone, a Session Initiation Protocol (SIP) telephone, an IoT device, a satellite handheld terminal, a Wireless Local Loop (WLL) station, a Personal Digital Assistant (PDA), a handheld device with wireless communication functionality, a computing device or other processing device connected to a wireless modem, a vehicle-mounted device, a wearable device, a terminal device in a 5G network, or a terminal device in a future evolution network, or the like.

The terminal device 110 may be used for device-to-device (D2D) communication.

The wireless communication system 100 may further include a core network device 130 that communicates with a base station. The core network device 130 may be a 5G Core (5GC) device, which is for example, an Access and Mobility Management Function (AMF), for another example, an Authentication Server Function (AUSF), for another example, a User Plane Function (UPF), for another example, a Session Management Function (SMF). Alternatively, the core network device 130 may also be an Evolved Packet Core (EPC) device of an LTE network, for example, a Session Management Function + Core Packet Gateway (SMF + PGW-C) device of the core network. It should be understood that the SMF + PGW-C may simultaneously implement functions capable of being implemented by the SMF and the PGW-C. In the process of network evolution, the core network device may be called by other names, or may form a new network entity by dividing the functions of the core network, which is not limited by the embodiments of the present disclosure.

The respective functional units in the communication system 100 may also establish a connection between each other through a next generation network (NG) interface to achieve communication.

For example, a terminal device establishes an air interface connection with an access network device through a Uu interface for transmitting user plane data and control plane signaling; the terminal device may establish a control plane signaling connection with an AMF through NG interface 1 (N1 for short); the access network device, such as a next generation radio access base station (gNB), can establish a user plane data connection with a UPF through NG interface 3 (N3 for short); the access network device can establish a control plane signaling connection with the AMF through NG interface 2 (N2 for short); the UPF may establish a control plane signaling connection with an SMF through NG interface 4 (N4 for short); the UPF may interchange user plane data with a data network through NG interface 6 (N6 for short); the AMF may establish a control plane signaling connection with the SMF through NG interface 11 (N11 for short); and the SMF may establish a control plane signaling connection with the PCF through NG interface 7 (N7 for short).

FIG. 1 exemplarily illustrates one base station, one core network device, and two terminal devices. Alternatively, the wireless communication system 100 may include a plurality of base station devices, and another number of terminal devices may be included within the coverage range of each base station, which is not limited in the embodiments of the present disclosure.

It should be noted that FIG. 1 only illustrates a system applicable to the present disclosure as an example, and the method shown in the embodiment of the present disclosure may also be applied to other systems. Further, the terms "system" and "network" are often used interchangeably herein. The term "and/or" describes only an association relationship between associated objects, and means that there may be three relationships, for example, A and/or B, which may mean that A alone is present, A and B simultaneously exist, and B alone is present. In addition, the character "/" herein generally indicates that the related objects before and after are in an "or" relationship. It should also be understood that the "indication" mentioned in the embodiments of the present disclosure may mean a direct indication, an indirect indication, or an associated relationship. For example, A indicates B, which may mean that A directly indicates B, for example, B can be acquired by A; or mean that A indicates B indirectly, for example A indicates C, and B can be acquired through C; or mean that there is an association relationship between A and B. It should also be understood that "correspond" mentioned in the embodiments of the present disclosure may indicate that there is a direct correspondence or indirect correspondence between the two, or may indicate that there is a correlation relationship between the two, or may indicate a relationship between indicating and being indicated, configuring and being configured, or the like. It should also be understood that the "predefined" or "predefined rules" mentioned in the embodiments of the present disclosure may be implemented by storing corresponding codes, tables in advance in devices (e.g., including terminal devices and network devices) or by other ways that may be used to indicate relevant information, and the specific implementations thereof is not limited in the present disclosure. For example, "predefined" may refer to being defined in a protocol. It should also be understood that in the embodiments of the present disclosure, the "protocol" may refer to a standard protocol in the field of communication, and may include, for example, an LTE protocol, an NR protocol, and related protocols applied to future communication systems, which is not limited in the present disclosure.

In order to facilitate understanding of the technical solutions of the embodiments of the present disclosure, the related technologies of the embodiments of the present disclosure will be described below, and the related technologies below can be arbitrarily combined with the technical solutions of the embodiments of the present disclosure as options, and all of them belong to the scope of protection of the embodiments of the present disclosure.

With people's pursuit of speed, latency, high-speed mobility, energy efficiency, and the diversity and complexity of businesses in future life, to this end, the 3rd Generation Partnership Project (3GPP) international standards organization began to develop the 5th generation (5G). The main application scenarios of 5G include: Enhanced Mobile Broadband (eMBB), Ultra Reliable and Low Latency Communication (URLLC), and Massive MachineType Communication (mMTC).

In the 5G network environment, in order to reduce air interface signaling, quickly restore wireless connections, and quickly restore data services, a new Radio Resource Control (RRC) state is defined, that is, the RRC _ INACTIVE state. This state is different from idle state (RRC _ IDLE state) and active state (RRC _ ACTIVE state).

RRC _ IDLE state: Mobility is UE-based cell selection and reselection, paging is initiated by a Core Network (CN), and the paging area is configured by the CN; There is no UE Access Stratum (AS) context on the base station side, and there is no RRC connection.

RRC _ CONNECTED state: There is an RRC connection, and a base station and UE have a UE AS context. The network side knows that the location of the UE is at the specific-cell level. Mobility is the one controlled by the network side. Unicast data may be transmitted between the UE and the base station.

RRC _ INACTIVE state: Mobility is UE-based cell selection and reselection, there is a connection between a core network and an access network (CN-NR), a UE AS context exists on a certain base station, paging is triggered by a Radio Access Network (RAN), the RAN-based paging area is managed by the RAN, and the network side knows that the location of the UE is at a RAN-based-paging-area level.

For UE in the RRC _ IDLE state and the RRC _ INACTIVE state, a prerequisite for being able to camp in a certain cell is that the signal quality of the cell (measurement results of Reference Signal Received Power (RSRP) and Reference Signal Received Quality (RSRQ)) satisfies an S criterion for cell selection, and the UE will continue evaluation for cell reselection after selecting an appropriate cell.

S Criterion:

$$\text{Srxlev} > 0 \text{ and } \text{Squal} > 0$$

Srxlev = Qrxlevmeas - (Qrxlevmin + Qrxlevminoffset)- Pcompensation - Qoffsettemp

$$\text{Squal} = \text{Qqualmeas} - (\text{Qqualmin} + \text{Qqualminoffset}) - \text{Qoffsettemp}$$

The meaning of each parameter in the S criterion is shown in Table 1.

Table 1. Meaning of each parameter in the S criterion

| | |
|---|---|
| Srxlev | S value related to RSRP for cell selection, in decibels (dB) |
| Squal | S value related to RSRQ for cell selection, in dB |
| Qoffsettemp | Temporary offset value, notified in system broadcast |
| Qrxlevmeas | RSRP measurement amount |
| Qqualmeas | RSRQ measurement amount |
| Qrxlevmin | Minimum RSRP reception strength requirement of the cell, notified in system broadcast |
| Qqualmin | Minimum RSRQ requirement of the cell, notified in system broadcast |
| Qrxlevminoffset | Offset of Qrxlevmin, for preventing ping-pong effect between two PLMNs due to radio environment fluctuation. It is considered only when normally camping on a suitable cell of a Visited Public Land Mobile Network (VPLMN) while periodically searching for a higher priority PLMN, and is notified in system broadcast |
| Qqualminoffset | Offset of Qqualmin, for preventing ping-pong effect between two PLMNs caused by radio environment fluctuation. It is considered only when normally camping on a suitable cell of a VPLMN while periodically searching for a higher priority PLMN, and is notified in system broadcast |
| Pcompensation | Power compensation due to low power of the electronic device, notified in system broadcast |

The Qrxlevmeas and Qqualmeas are cell received power RSRP and signal quality RSRQ measured by the UE:

Qrxlevmin and Qqualmin are the minimum received power RSRP and signal quality RSRQ required by the network

side;
Qrxlevminoffset and Qqualminoffset are offsets for preventing ping-pong effect between two PLMNs due to radio environment fluctuation. The offsets are considered only when normally camping on a suitable cell of a VPLMN while periodically searching for a higher priority PLMN.

Pcompensation is power compensation, which is, for example, caused due to low power of UE when the maximum transmission power allowed by the network side is greater than the maximum uplink transmission power determined by the capability of the UE.

Qoffsettemp is only used in special scenarios, not applicable in normal situations, such as the "Chiba Issue" scenario.

Cell reselection refers to a process in which UE in idle mode monitors the signal quality of neighbor cells and the current cell to select a best cell to provide service signals. In the measurement process for neighbor cells, when the signal quality and level of a neighbor cell satisfy the S criterion and a reselection decision criterion (R criterion), the UE would abandon the current cell and camp in the neighbor cell. When the signal quality and level of the neighbor cell satisfy the S criterion and an R criterion, the UE will access the cell to camp.

After the UE successfully camps, measurement for the current cell will be continued. Srxlev is calculated by an RRC layer according to an RSRP measurement result, and is compared with an intra-frequency measurement start threshold (Sintrasearch) and an inter-frequency/inter-system measurement start threshold (Snonintrasearch) to obtain a decision condition of whether to start neighbor-cell measurement.

Regarding measurement configuration, an SSB Measurement Timing Configuration (SMTC) (per frequency SMTC) is configured per intra-frequency frequency point and inter-frequency frequency point to assist UE in measurement, so as to save power of the UE.

The acquisition process of cell signal quality:

- The system broadcasts a parameter N and a threshold per frequency for selecting a top beam.
- Linear averaging is performed on signal quality of the best (top) N beams satisfying a threshold;
- If the parameter N and threshold per frequency are not broadcast, the signal quality of the top beam in a cell is the signal quality of the cell.

Target cell selection (R criterion)

The candidate cells are controlled by rangeToBestCell, that is, among all candidate cells that have a signal quality difference from the best cell less than the rangeToBestCell, the cell having the most beams satisfying the threshold is selected as the target cell.

R Criterion:

Neighbor cell Rn > current serving cell Rs, where,

$$Rs = Qmeas,s + Qhyst - Qoffsettemp$$

$$Rn = Qmeas,n - Qoffset - Qoffsettemp$$

The meaning of each parameter in the formula of R criterion is shown in Table 2.

Table 2. The meaning of each parameter in the formula of R criterion

| | |
|---|---|
| Qmeas | RSRP measurement amount for cell reselection |
| Qoffset | $Qoffset_{s,n}$ for intra-frequency measurement<br>$Qoffset_{s,n} + Qoffset_{frequency}$ for inter-frequency measurement, $Qoffset_{frequency}$ is a frequency-related offset value |
| Qoffsettemp | Temporary offset value, notified in system broadcast |
| Qhyst | Cell reselection hysteresis value, used to adjust the difficulty of reselection and reduce ping-pong effect, notified in system broadcast |

- Frequency priority: In order to achieve load balancing at different frequency points, the network side may set priorities for different frequency points. UE preferentially camps on a frequency point with high priority. The frequency-point priority may be obtained from system broadcast, or obtained from dedicated signaling (RRC Release), or inherited from other RAT.

All the relevant parameters of UE measurement behavior constraints in IDLE state come from system broadcast messages. The following assumes that all relevant parameters are configured. Without configuration, the relevant constraints do not exist.

For the start of intra-frequency measurement, when serving cell Srxlev > intra-frequency measurement RSRP threshold ($S_{IntraSearchP}$) and serving cell Squal > intra-frequency measurement RSRQ threshold ($S_{IntraSearchQ}$), the intra-frequency neighbor-cell measurement is not started, otherwise the intra-frequency neighbor-cell measurement is started.

For the inter-frequency measurement of the same or low priority, when serving cell Srxlev > inter-frequency measurement RSRP threshold ($S_{nonIntraSearchP}$) and serving cell Squal > inter-frequency measurement RSRQ threshold ($S_{nonIntraSearchQ}$), the inter-frequency measurement of the same or low priority is not started, otherwise it is started.

The inter-frequency measurement of high priority is always started.

The cell reselection behavior is based on measurement results of neighbor cells.

To perform cell reselection for intra-frequency cells and inter-frequency cells with the same priority, it is necessary to satisfy the R criterion (sorted by RSRP), that is, the signal quality of a new cell is better than that of the current cell and lasts for a specified length of time, and UE camps in the original cell for no less than 1 s.

To perform reselection for a high-priority cell, the signal quality of the high-priority cell needs to be higher than a certain threshold and lasts for a specified length of time, and the UE camps in the original cell for no less than 1 s.

When re-selection is performed for a low-priority cell, it is necessary that there is no high-priority cell, the same-priority cell meets the requirements, the signal quality of the original cell is lower than a certain threshold, the signal quality of the low-priority cell is higher than a certain threshold and lasts for a certain length of time, and the UE camps in the original cell for no less than 1 s.

In the related art, a wake-up signal with lower power consumption, that is, a low power Wake-up Signal (LP-WUS), that is, an ultra-low power WUS, is introduced, and a terminal uses a receiver with lower power consumption, that is, not using a primary receiver. After receiving an LP-WUS, the terminal starts the primary receiver to monitor a downlink signal, so as to achieve energy saving.

In addition, there is a viewpoint that the LP-WUS can be used in the RRC CONNECTED state in addition to the RRC IDLE/RRC INACTIVE state.

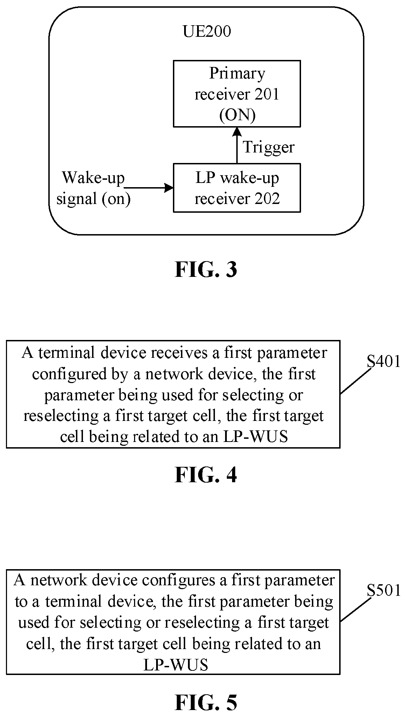

The working principle of the LP-WUS is shown in FIGS. 2 and 3. UE 200 includes a primary receiver 201 and a low-power wake-up receiver 202, and the UE receives a wake-up signal indicating ON and OFF based on the LP wake-up receiver 202. As shown in FIG. 2, when the LP wake-up receiver 202 receives a wake-up signal indicating OFF, the primary receiver 201 is triggered to turn off or enter a deep sleep state. As shown in FIG. 3, the LP wake-up receiver 202 receives a wake-up signal indicating ON, and the LP wake-up receiver 202 triggers the primary receiver 201 to turn on.

After introducing a low-power receiver, from the perspective of terminal, compared with camping in an ordinary cell, the primary receiver can be turned off when the terminal camps in a cell supporting LP-WUS, thus achieving bettter power saving effect. Currently, 3GPP evaluates that the coverage of LP-WUS signals cannot cover the entire cell, that is, when UE is in a situation where the coverage of a serving cell is poor, the UE will not be able to receive LP-WUS signals. In this case, the primary receiver is required to be turned on to monitor paging messages. The existing cell selection/reselection procedure does not consider the LP-WUS coverage, so the UE is likely to select a cell with poor LP-WUS signal coverage, and thus the UE cannot achieve power saving by using the LP-WUS signals.

In order to facilitate understanding of the technical solutions of the embodiments of the present disclosure, the technical solutions of the present disclosure will be described in detail below with reference to specific examples. As an optional solution, the above related technologies can be arbitrarily combined with the technical solutions of the embodiments of the present disclosure, and all of them belong to the scope of protection of the embodiments of the present disclosure. Embodiments of the present disclosure include at least some of the following contents.

An embodiment of the present disclosure provides a method of cell selection or reselection, as shown in FIG. 4, and the method includes:

S401, a terminal device receives a first parameter configured by a network device, the first parameter being used for selecting or reselecting a first target cell, the first target cell being related to an LP-WUS.

An embodiment of the present disclosure provides a method of cell selection or reselection, as shown in FIG. 5, and the method includes:

S501, a network device configures a first parameter to a terminal device, the first parameter being used for selecting or reselecting a first target cell, the first target cell being related to an LP-WUS.

In the methods of cell selection or reselection illustrated in FIG. 4 or FIG. 5, the network device configures a first parameter to the terminal device, the first parameter is a parameter for an LP-WUS, and the first parameter is used for the

terminal device to perform cell selection or cell reselection. Cell selection is understood as performing cell search when the terminal device camps in any cell, and selecting a cell to camp on the basis of the search result of the cell search. The camped cell selected by performing cell selection based on the first parameter is referred to as a first target cell of the cell selection. Cell reselection means that when the terminal device camps in a cell and is in an idle (RRC _ IDLE) state or a deactivated (RRC _ INACTIVE) state, in order to obtain better quality of service, a cell with the best quality of service (QoS) is selected from a plurality of cells including the current serving cell and neighbor cells of the current serving cell, wherein the cell with the best QoS selected by cell reselection based on the first parameter is called the first target cell of cell reselection.

The terminal device in the embodiments of the present disclosure is a terminal device supporting LP-WUS, and the terminal device includes a primary receiver and a low-power wake-up receiver. The terminal device supporting LP-WUS can receive a wake-up signal indicating OFF, and enable or trigger the primary receiver to turn off or enter a deep sleep state based on the wake-up signal indicating shutdown, thereby achieving the effect of power saving.

The terminal device may determine the first target cell by performing cell selection or cell reselection based on the first parameter, and when the first target cell is a cell supporting LP-WUS, the terminal device is necessarily able to receive the LP-WUS after accessing the first target cell. When transmission of downlink data is needed, the network device may wake up the primary receiver of the terminal device through the LP-WUS to monitor downlink data and/or paging messages through the primary receiver, and when transmission of downlink data and/or paging messages is not needed, the network device may trigger the terminal device through the LP-WUS to trigger the primary receiver to turn off or enter a deep sleep state, thereby achieving the effect of power saving.

In the methods of cell selection or reselection according to the embodiments of the present disclosure, the network device may configure a first parameter for the LP-WUS to the terminal device, and the terminal device can perform cell selection or reselection based on the configured first parameter to obtain the first target cell considering the LP-WUS, thereby ensuring that the cell in which the terminal device camps uses the LP-WUS, reducing power consumption of the terminal device and achieving the purpose of saving power and energy.

In some embodiments, the first target cell meets an LP-WUS coverage condition, or meets a received signal quality requirement and/or a received signal strength requirement of the LP-WUS.

When the first target cell meets the LP-WUS coverage condition, or meets the received signal quality requirement and/or the received signal strength requirement of the LP-WUS, it can be understood that when the terminal device accesses the first target cell, the quality of the received signal at the current location is greater than preset received signal quality or the strength of the received signal is greater than preset received signal strength when the terminal device receives the LP-WUS, and the preset received signal strength is the minimum received signal strength when the terminal device receives the LP-WUS.

In some embodiments, the terminal device receives the first parameter of the network device configuration in S401 of FIG. 4, including that:

the terminal device receives, through a system message sent by the network device, the first parameter configured by the network device.

In some embodiments, the network device configures the first parameter to the terminal device in S501 of FIG. 5, including that:

the network device configures the first parameter to the terminal device through a system message.

In an embodiment of the present disclosure, the network device may configure the first parameter to the terminal device through one or more system messages.

In an embodiment of the present disclosure, the first parameter configured by the network device to the terminal device may include the first parameter of a serving cell, the first parameter of an intra-frequency neighbor cell, and the first parameter of an inter-frequency neighbor cell.

The first parameter of the serving cell is used for the terminal device to perform cell selection, or for the terminal device to determine whether to start the intra-frequency measurement or start the inter-frequency measurement with the same priority or low priority.

The first parameter of an intra-frequency neighbor cell is used for determining whether the neighbor cell in the same frequency band as the serving cell can be determined as the first target cell in the process of cell reselection by the terminal device.

The first parameter of the inter-frequency neighbor cell is used for determining whether the neighbor cell in a different frequency band from the serving cell can be determined as the first target cell in the process of cell reselection by the terminal device.

Optionally, the system message includes one or more of the following: System Information Block (SIB) 1, SIB2, and SIB4. The first parameter may be carried in one or more of SIB1, SIB2, and SIB4.

In the embodiments of the present disclosure, the system message for transmitting the first parameter may include other types of system messages in addition to SIB1, SIB2, and SIB4.

In some embodiments, the first parameter of the serving cell may be configured by SIB1.

The parameter provided by the SIB1 sent by the network device to the terminal device may include the first parameter of the serving cell, and the terminal device may obtain the first parameter of the serving cell by analyzing the SIB1.

In some embodiments, the first parameter of the intra-frequency neighbor cell may be configured by SIB2.

The parameter provided by the SIB2 sent by the network device to the terminal device may include the first parameter of an intra-frequency neighbor cell, and the terminal device may obtain the first parameter of an intra-frequency neighbor cell by analyzing the SIB2.

In some embodiments, the first parameter of the inter-frequency neighbor cell may be configured by the SIB4.

The parameter provided by the SIB4 sent by the network device to the terminal device may include the first parameter of the inter-frequency neighbor cell, and the terminal device may obtain the first parameter of the inter-frequency neighbor cell by analyzing the SIB4.

In some embodiments, the first parameter is used to indicate one or both of:
a reference signal reception power (RSRP) threshold for reception of the LP-WUS and a reference signal reception quality (RSRQ) threshold for reception of the LP-WUS.

The RSRP threshold for reception of the LP-WUS may be understood as the lowest or smallest RSRP for reception of the LP-WUS, and may be identified as QRxLevMinLP-WUS or QRxLevMinlpwus.

The RSRQ threshold for reception of the LP-WUS may be understood as the lowest or smallest RSRQ for reception of the LP-WUS, and may be identified as QQualMinLP-WUS or QQualMinlpwus.

Hereinafter, for convenience of description, the RSRP threshold for reception of the LP-WUS is described as a first RSRP threshold, and the RSRQ threshold for reception of the LP-WUS is described as a first RSRQ threshold.

In the embodiments of the present disclosure, the first parameter of the serving cell is used to indicate the first RSRP threshold and/or the first RSRQ threshold of the serving cell, the first parameter of an intra-frequency neighbor cell is used to indicate the first RSRP threshold and/or the first RSRQ threshold of the intra-frequency neighbor cell, and the first parameter of an inter-frequency neighbor cell is used to indicate the first RSRP threshold and/or the first RSRQ threshold of the inter-frequency neighbor cell.

In some embodiments, the first parameter may include one or both of: the RSRP threshold for reception of the LP-WUS and the RSRQ threshold for reception of the LP-WUS.

In this case, the first parameter includes the first RSRP threshold and/or the first RSRQ threshold per se, that is, the absolute value of the first RSRP threshold and/or the first RSRQ threshold.

When the first parameter indicates the first RSRP threshold, the first parameter may include first information indicating the first RSRP threshold, and a value of the first information is a value of the first RSRP threshold. The first information may be identified as q-RxLevMinLP-WUS.

When the first parameter indicates the first RSRQ threshold, the first parameter may include second information indicating the first RSRQ threshold, and a value of the second information is a value of the first RSRQ threshold. The second information may be identified as q-QualMinLP-WUS.

In some embodiments, the first parameter may include one or both of:

an RSRP threshold offset between an RSRP threshold for reception of a first signal and the RSRP threshold for reception of the LP-WUS, the first signal being a non-LP-WUS signal; and
an RSRQ threshold offset between an RSRQ threshold for reception of the first signal and the RSRQ threshold for reception of the LP-WUS.

The first signal is a downlink signal other than the LP-WUS, such as a synchronization signal block (SSB) signal.

The RSRP threshold for reception of the first signal may be understood as the minimum or lowest RSRP at which the first signal is received, and may be identified as QRxLevlMin.

The RSRQ threshold for reception of the first signal may be understood as the minimum or lowest RSRQ at which the first signal is received, and may be identified as QQualMin.

Hereinafter, for convenience of description, the RSRP threshold for reception of the first signal is described as a second RSRP threshold, and the RSRQ threshold for reception of the first signal is described as a second RSRQ threshold.

Here, the first parameter does not include the first RSRP threshold and/or the first RSRQ threshold itself, but includes an RSRP threshold offset of the first RSRP threshold with respect to the second RSRP threshold, and/or an RSRQ threshold offset of the first RSRQ threshold with respect to the second RSRQ threshold, that is, a relative value of the first RSRP threshold relative to the second RSRP threshold, and/or, a relative value of the first RSRQ threshold relative to the second RSRQ threshold.

When the first parameter includes the RSRP threshold offset, the terminal device may determine the first RSRP threshold based on the second RSRP threshold and the RSRP threshold offset included in the first parameter.

When the first parameter includes the RSRQ threshold offset, the terminal device may determine the first RSRQ

threshold based on the second RSRQ threshold and the RSRQ threshold offset included in the first parameter.

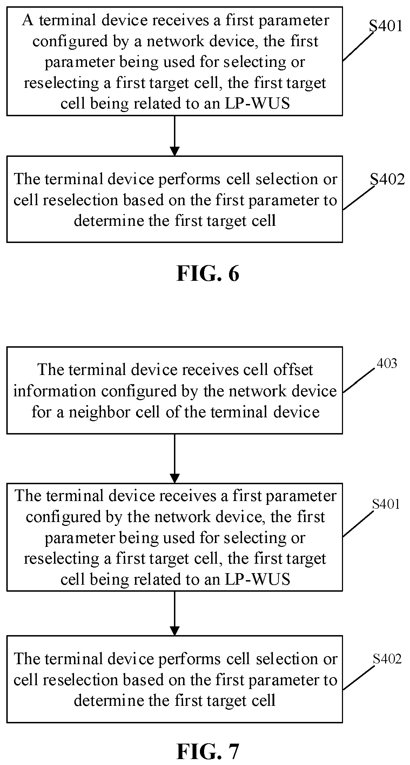

Based on FIG. 4, as shown in FIG. 6, the method of cell selection or reselection according to the embodiments of the present disclosure further includes:

S402, the terminal device performs cell selection or cell reselection based on the first parameter to determine the first target cell.

After receiving the first parameter configured by the network device, the terminal device may perform cell selection or cell reselection based on the first parameter and determine the first target cell in a case where the condition for cell selection or cell reselection is satisfied.

After determining the first target cell, the terminal device may access the first target cell and use the selected first target cell as a serving cell.

In some embodiments, the terminal device performs cell selection based on the first parameter to determine the first target cell in S402, including:

the terminal device determines a cell satisfying a first criterion among searched cells as the first target cell, the first criterion being an S criterion based on the first parameter of the serving cell.

It is understood that the first target cell is a cell that satisfies the first criterion among cells searched by the terminal device, and the first criterion is an S criterion based on the first parameter of the serving cell.

In the cell selection process, the terminal device may perform cell search and determines whether the searched cell satisfies the first criterion; if the cell satisfies the first criterion, the cell is regarded as the first target cell; and if the cell does not satisfy the first criterion, the terminal device continues to perform cell search and determines whether the searched new cell satisfies the first criterion.

In the embodiments of the present disclosure, the first criterion may be an S criterion determined based on the first RSRP threshold and/or the first RSRQ threshold of the serving cell indicated by the first parameter of the serving cell.

In an example, the first criterion may be expressed as Equation (1):

$$Srxlevlpwus > 0$$
$$Srxlevlpwus = Q_{rxlevmeas} - \left(Q_{rxlevminlpwus} + Q_{rxlevminoffset}\right) - P_{compensation} - Q_{offsettemp} \quad \text{Equation (1);}$$

*Srxlevlpwus* is a cell selection reception level value applied to LP-WUS, $Q_{rxlevmeas}$ is an RSRP measurement amount of the searched cell, $Q_{rxlevminoffset}$ is an offset amount of $Q_{rxlevminlpwus}$, $P_{compensation}$ is power compensation, and $Q_{offsettemp}$ is a temporary offset value.

In an example, the first criterion may be expressed as Equation (2):

$$Squallpwus > 0$$
$$Squallpwus = Q_{qualmeas} - \left(Q_{qualminlpwus} + Q_{qualminoffset}\right) - Q_{offsettemp} \quad \text{Equation (2);}$$

*Squqllpwus* is a cell selection quality value applied to LP-WUS, $Q_{qualmeas}$ is an RSRQ measurement amount of the searched cell, and $Q_{qualminoffset}$ is an offset amount of $Q_{qualminlpwus}$.

In an example, the first criterion may be expressed as Equation (3):

$$Srxlevlpwus > 0 and \ Squallpwus > 0$$

$$Srxlevlpwus = Q_{rxlevmeas} - \left(Q_{rxlevminlpwus} + Q_{rxlevminoffset}\right) - P_{compensation} - Q_{offsettemp}$$

$$Squallpwus = Q_{qualmeas} - \left(Q_{qualminlpwus} + Q_{qualminoffset}\right) - Q_{offsettemp}$$

$Q_{rxlevminlpwus}$ in Equation (1) and Equation (3) is the first RSRP threshold of the serving cell indicated by the first parameter of the serving cell. $Q_{qualminlpwus}$ in Equation (2) and Equation (3) is the first RSRQ threshold of the serving cell indicated by the first parameter of the serving cell.

In some embodiments, the terminal device performs cell reselection based on the first parameter to determine the first target cell in S402, which includes:

the terminal device determines the first target cell from one or more neighbor cells satisfying a second criterion, the second

criterion being an S criterion based on the first parameter of neighbor cell(s).

It is understood that the first target cell is determined from one or more neighbor cells satisfying the second criterion which is an S criterion based on the first parameter of neighbor cell(s).

In the cell reselection process, the terminal device may perform measurement on one or more neighbor cells, camp in the current serving cell for more than 1 s, and select a neighbor cell satisfying the second criterion and the R criterion as the second target cell from the plurality of neighbor cells.

In the embodiments of the present disclosure, the second criterion may be determined based on a plurality of parameter values including the first RSRP threshold and/or the RSRQ threshold indicated by the first parameter of the neighbor cell.

In an example, the second criterion may be an S criterion determined based on the first RSRP threshold and/or the first RSRQ threshold of an intra-frequency neighbor cell or a non-frequency neighbor cell indicated by the first parameter.

For the intra-frequency neighbor cell, the second criterion may be an S criterion determined based on the first RSRP threshold and/or the first RSRQ threshold of the intra-frequency neighbor cell indicated by the first parameter. For the inter-frequency neighbor cell, the second criterion may be an S criterion determined based on the first RSRP threshold and/or the first RSRQ threshold of the inter-frequency neighbor cell indicated by the first parameter.

The first neighbor cell is any one of the one or more neighbor cells of the terminal device. For one of the one or more neighbor cells of the terminal device, the neighbor cell may be an intra-frequency neighbor cell or an inter-frequency neighbor cell. When the neighbor cell and the serving cell are cells on the same frequency band, the neighbor cell is an intra-frequency neighbor cell; and when the neighbor cell and the serving cell are cells on different frequency bands, the neighbor cell is an inter-frequency neighbor cell.

For the intra-frequency neighbor cell, the first RSRP threshold or the first RSRQ threshold of the intra-frequency neighbor cell is indicated by the first parameter of the intra-frequency neighbor cell.

The second criterion may be expressed as Equation (1), Equation (2), or Equation (3). For an intra-frequency neighbor cell, $Q_{rxlevminlpwus}$ in Equation (1) and Equation (3) is the first RSRP threshold of the intra-frequency neighbor cell indicated by the first parameter of the intra-frequency neighbor cell; and $Q_{qualminlpwus}$ in Equation (2) and Equation (3) is the first RSRQ threshold of the intra-frequency neighbor cell indicated by the first parameter of the intra-frequency neighbor cell.

For an inter-frequency neighbor cell, the first RSRP threshold or the first RSRQ threshold of the inter-frequency neighbor cell is indicated by the first parameter of the inter-frequency neighbor cell.

The second criterion may be expressed as Equation (1), Equation (2), or Equation (3). For an inter-frequency neighbor cell, the $Q_{rxlevminlpwus}$ in Equation (1) and Equation (3) is the first RSRP threshold of the inter-frequency neighbor cell indicated by the first parameter of the inter-frequency neighbor cell; and $Q_{qualminlpwus}$ in Equation (2) and Equation (3) is the first RSRQ threshold of the inter-frequency neighbor cell indicated by the first parameter of the inter-frequency neighbor cell.

In some embodiments, for a first neighbor cell among the one or more neighbor cells, the second criterion used by the first neighbor cell may be determined based on the first parameter of neighbor cell(s) and cell offset information of the first neighbor cell.

In the embodiments of the present disclosure, cell offset information (cell specific offset) may be configured for a neighbor cell. The cell offset information indicates the cell offset of the corresponding neighbor cell. For a neighbor cell, the terminal device may determine the second criterion based on the first parameter of the neighbor cell and a cell offset indicated by offset information of the neighbor cell.

In some embodiments, the cell offset information is used to indicate one or both of: an RSRP offset, and an RSRQ offset.

The cell offset information of a neighbor cell may include first offset information and/or second offset information, the first offset information indicating an RSRP offset, and the second offset information indicating an RSRQ offset.

The RSRP offset amount and the RSRQ offset amount indicated by the cell offset information are offset amounts applied to the neighbor cell(s) of the LP-WUS.

In this case, for a neighbor cell, the second criterion is determined based on the following information amounts: the first RSRP threshold and/or the RSRQ threshold indicated by the first parameter of the neighbor cell, the RSRP offset (Qrxlevminoffsetcelllpwus) and/or the RSRQ offset (Qqualminoffsetcelllpwus) indicated by the offset information of the neighbor cell.

For a neighbor cell, the second criterion may be expressed as Equation (4), Equation (5), or Equation (6).

$$Srxlevlpwus > 0$$
$$Srxlevlpwus = Q_{rxlevmeas} - \left(Q_{rxlevminlpwus} + Q_{rxlev\min offsetcelllpwus} + Q_{rxlevminoffset}\right) - P_{compensation} - Q_{offsettemp}$$

Equation (4);

$$Squallpwus > 0$$
$$Squallpwus = Q_{qualmeas} - \left(Q_{qualminlpwus} + Q_{qual\min offsetcelllpwus} + Q_{qualminoffset}\right) - Q_{offsettemp}$$

Equation (5);

$$Srxlevlpwus > 0 \ and \ Squallpwus > 0$$
$$Srxlevlpwus = Q_{rxlevmeas} - \left(Q_{rxlevminlpwus} + Q_{rxlev\min offsetcelllpwus} + Q_{rxlevminoffset}\right) - P_{compensation} - Q_{offsettemp}$$
$$Squallpwus = Q_{qualmeas} - \left(Q_{qualminlpwus} + Q_{\mathrm{qual}\min offsetcelllpwus} + Q_{qualminoffset}\right) - Q_{offsettemp}$$

Equation (6).

It can be understood that $Q_{rxlev\min offsetcelllpwus}$ is added to the information amount of Equation (4) or Equation (6) relative to *Srxlevlpwus* of Equation (1) or Equation (3). $Q_{\mathrm{qual\ min}\ offsetcelllpwus}$ is added to the amount of information of Equation (5) or Equation (6) relative to *Squallpwus* of Equation (2) or Equation (3).

In some embodiments, on the basis of FIG. 6, as shown in FIG. 7, the terminal device further performs the following processing:

S403: The terminal device receives cell offset information configured by the network device for a neighbor cell of the terminal device.

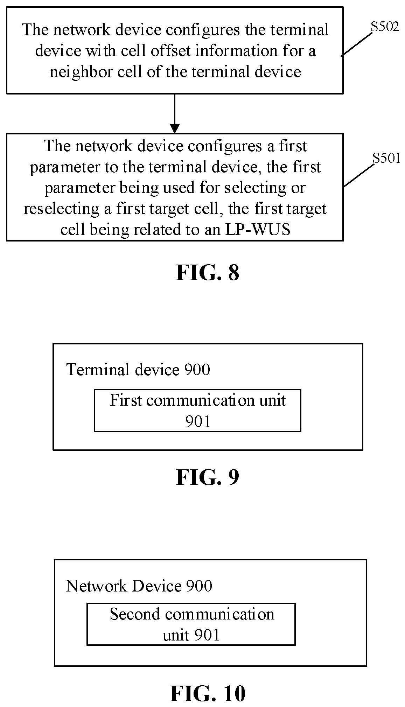

In some embodiments, for the network device, as shown in FIG. 8, the network device further implements the following processing:

S502: The network device configures the terminal device with cell offset information for a neighbor cell of the terminal device.

Note that, in FIG. 7, the execution of S403 precedes the execution of S402, and in FIG. 8, the execution of S502 precedes the execution of S501. In an actual application, the execution order of S403 and S402 is not limited, that is, S403 and S402 may be executed simultaneously, or S402 may be executed before S403; or the execution order of S502 and S501 is not limited, that is, S502 and S501 may be executed simultaneously, or S501 may be executed before S502.

For different neighbor cells, the network device may configure cell offset information corresponding to different neighbor cells to the terminal device.

In some embodiments, the network device may configure the cell offset information to the terminal device through a system message.

In the embodiments of the present disclosure, the cell offset information for different neighbor cells may be independent.

In the embodiments of the present disclosure, the cell offset information configured by the network device may include cell offset information of an intra-frequency neighbor cell and/or cell configuration information of an inter-frequency neighbor cell.

In some embodiments, the cell offset information of an intra-frequency neighbor cell may be configured in SIB3.

In the embodiments of the present disclosure, if a neighbor cell is an intra-frequency neighbor cell, the terminal device may determine whether cell offset information of the neighbor cell is configured in SIB 3; if the cell offset information of the neighbor cell is not configured in SIB 3, the first criterion is determined based on the first parameter of the intra-frequency neighbor cell, and if the cell offset information of the neighbor cell is configured in SIB 3, the first criterion is determined based on the first parameter of the intra-frequency neighbor cell and the cell offset information.

In some embodiments, the cell offset information of an inter-frequency neighbor cell may be configured in SIB4.

If a neighbor cell is an inter-frequency neighbor cell, the terminal device may determine whether the cell offset information of the neighbor cell is configured in the SIB 4; if the cell offset information of the neighbor cell is not configured in the SIB 4, the first criterion is determined based on the first parameter of the inter-frequency neighbor cell, and if the cell offset information of the neighbor cell is configured in the SIB 4, the first criterion is determined based on the first parameter of the inter-frequency neighbor cell and the cell offset information.

It is understood that the cell offset information may be configured by other types of system messages in addition to be configured by SIB3 and SIB4.

In some embodiments, the first parameter of the serving cell is used to determine whether to start intra-frequency measurement and/or to start inter-frequency measurement with same priority or low priority.

The terminal device may determine *Srxlevlpwus* and/or *Squallpwus* of the serving cell based on the first parameter, and determine whether to perform intra-frequency measurement and/or inter-frequency measurement with the same-priority or low-priority based on *Srxlevlpwus*.

*Srxlevlpwus* can be expressed as Equation (7) and *Squallpwus* can be expressed as Equation (8):

$$Srxlevlpwus = Q_{rxlevmeas} - \left(Q_{rxlevminlpwus} + Q_{rxlevminoffset}\right) - P_{compensation} - Q_{offsettemp} \quad \text{Equation (7);}$$

$$Squallpwus = Q_{qualmeas} - \left(Q_{qualminlpwus} + Q_{qualminoffset}\right) - Q_{offsettemp} \quad \text{Equation (8);}$$

$Q_{rxlevminlpwus}$ in formula (7) is the first RSRP threshold of the serving cell. $Q_{qualminlpwus}$ in Equation (8) is the first RSRQ threshold of the serving cell.

In an example, for intra-frequency measurement, if the *Srxlevlpwus* is less than or equal to the RSRP threshold ($S_{IntraSearchP}$) of intra-frequency cell measurement and/or the *Squallpwus* is less than or equal to the RSRQ threshold ($S_{IntraSearchQ}$) of intra-frequency cell measurement, the intra-frequency measurement is started; if *Srxlevlpwus* is greater than the RSRP threshold ($S_{IntraSearchP}$) of intra-frequency cell measurement and *Squallpwus* is greater than the RSRQ threshold ($S_{IntraSearchQ}$) of intra-frequency cell measurement, the intra-frequency measurement is not started.

In an example, for inter-frequency measurement of the same priority or low priority, if *Srxlevlpwus* is less than or equal to the RSRP threshold ($S_{nonIntraSearchP}$) of inter-frequency cell measurement and *Squallpwus* is less than or equal to the RSRQ threshold ($S_{nonIntraSearchQ}$) of inter-frequency cell measurement, the inter-frequency measurement of the same priority or low priority is started; if *Srxlevlpwus* is greater than the RSRP threshold ($S_{nonIntraSearchP}$) of inter-frequency cell measurement and *Squallpwus* is greater than the RSRQ threshold ($S_{nonIntraSearchQ}$) of inter-frequency cell measurement, the inter-frequency measurement of the same priority or low priority is not started.

It can be understood that when the current serving cell is a cell supporting LP-WUS, it is determined whether to start intra-frequency measurement and/or inter-frequency measurement of the same priority or low priority based on the first parameter of the serving cell.

In some embodiments, the terminal device may further perform the following processing:
in case of not determining the first target cell by the terminal device based on the first parameter, the terminal device performs cell selection or cell reselection based on a second parameter to determine a second target cell, and the second target cell being unrelated to the LP-WUS.

In some embodiments, the terminal device may further perform the following processing:
in case of the terminal device not being configured with the first parameter, the terminal device performs cell selection or cell reselection based on a second parameter to determine a second target cell, the second target cell being unrelated to the LP-WUS.

In some embodiments, the network device may further implement a process of configuring, to the terminal device, a second parameter for determining a second target cell, the second target cell being unrelated to the LP-WUS.

The condition for the second parameter for determining the second target cell may include:

Condition 1: the terminal device is configured with the first parameter, and the terminal device does not determine the first target cell based on the first parameter; and/or,
Condition 2: The terminal device is not configured with the first parameter.

When the condition for the second parameter for determining the second target cell includes condition 1, the terminal device may perform cell selection or cell reselection based on the first parameter, and the first target cell is not determined based on the first parameter, and the second target cell is determined based on the second parameter.

When the condition for the second parameter for determining the second target cell condition includes condition 2, and the terminal device does not configure the first parameter, the second target cell is determined based on the second parameter.

In an example, when the terminal device performs cell selection or cell reselection, it determines whether the first parameter is configured; if the first parameter is not configured, it determines a second target cell based on the second parameter; and if the first parameter is configured, the first target cell is determined based on the first parameter, and when the first target cell is not determined based on the first parameter, the second target cell is determined based on the second

parameter.

In some embodiments, the terminal device may further perform the following processing:

the terminal device receives the second parameter configured by the network device and sent by the network device through a system message.

In some embodiments, the network device may further perform the following processing:

the network device configures a second parameter to the terminal device through a system message.

In the embodiment of the present disclosure, the second parameter configured by the terminal device may include one or more of the following: the second parameter of a serving cell, the second parameter of an intra-frequency neighbor cell, and the second parameter of an inter-frequency neighbor cell.

The second parameter of the serving cell is used for the terminal device to perform cell selection, or for the terminal device to determine whether to start the intra-frequency measurement or start the inter-frequency measurement with the same priority or low priority.

The first parameter of an intra-frequency neighbor cell is used for determining whether the neighbor cell in the same frequency band as the serving cell can be determined as the second target cell in the process of cell reselection by the terminal device.

The first parameter of an inter-frequency neighbor cell is used for determining whether the neighbor cell in a different frequency band from the serving cell can be determined as the second target cell in the process of cell reselection by the terminal device.

Optionally, the system message transmitting the second parameter may include one or more of the following: SIB1, SIB2, SIB4. The second parameter may carry one or more of SIB1, SIB2, and SIB4.

In some embodiments, the second parameter of the serving cell may be configured by SIB1.

In some embodiments, the second parameter of the intra-frequency neighbor cell may be configured by SIB2.

In some embodiments, the second parameter of the inter-frequency neighbor cell may be configured by SIB4.

In some embodiments, the second parameter is used to indicate one or both of:

an RSRP threshold for reception of a first signal and an RSRQ threshold for reception of the first signal, the first signal being non-LP-WUS.

The RSRP threshold for reception of the first signal may be understood as the lowest or smallest RSRP for reception of the first signal, and may be identified as QRxLevMin.

The RSRQ threshold for reception of the first signal may be understood as the lowest or minimum RSRPQ for reception of the first signal, and may be identified as QqualMin.

Hereinafter, for convenience of description, the RSRP threshold for reception of the first signal is described as a second RSRP threshold, and the RSRQ threshold for reception of the first signal is described as a second RSRQ threshold.

In the embodiments of the present disclosure, the second parameter of the serving cell is used to indicate the second RSRP threshold and/or the second RSRQ threshold of the serving cell, the second parameter of an intra-frequency neighbor cell is used to indicate the second RSRP threshold and/or the second RSRQ threshold of the intra-frequency neighbor cell, and the second parameter of an inter-frequency neighbor cell is used to indicate the second RSRP threshold and/or the second RSRQ threshold of the inter-frequency neighbor cell.

In some embodiments, the second parameter may include third information for indicating the second RSRP threshold and/or fourth information for indicating the second RSRQ threshold. The third information may be identified as q-RxLevMin. The fourth information may be identified as q-QualMin.

It can be understood that, in a case where the current serving cell does not support LP-WUS or the current serving cell supports LP-WUS but the terminal device is not configured with the first parameter of the serving cell, the terminal device may determine whether to start intra-frequency measurement and/or inter-frequency measurement of the same-priority or low-priority based on the first parameter of the serving cell.

Hereinafter, the methods of cell selection or reselection provided by the embodiments of the present disclosure will be described with reference to a plurality of embodiments.

Embodiment 1: Introducing cell selection parameters unique to LP-WUS.

1. UE receives a system message broadcast, which includes information related to the serving cell and information related to the neighbor cell, wherein:

    a, the information related to the serving cell is configured by SIB1, including:

        i. q-RxLevMinLP-WUS, which is used by UE supporting LP-WUS capability, wherein the value of the q-RxLevMinLP-WUS parameter is not less than the q-RxLevMin value broadcast in SIB1; and/or

        ii. q-QualMinLP-WUS, which is used by UE supporting LP-WUS capability, wherein the value of the q-QualMinLP-WUS parameter is not less than the q-QualMin value broadcast in SIB1;

b, the information related to an intra-frequency neighbor cell is configured by SIB2, including:

i. q-RxLevMinLP-WUS, which is used by UE supporting LP-WUS capability, wherein the value of the q-RxLevMinLP-WUS parameter is not less than the q-RxLevMin value broadcast in SIB2; and/or
ii. q-QualMinLP-WUS, which is used by UE supporting LP-WUS capability, wherein the value of the q-QualMinLP-WUS parameter is not less than the q-QualMin value broadcast in SIB2;

c, the information related to an inter-frequency neighbor cell is configured by SIB4, including:

i, q-RxLevMinLP-WUS, which is used by UE supporting LP-WUS capability, and the value of the q-RxLevMinLP-WUS parameter is not less than the q-RxLevMin value broadcast in SIB4; and/or
ii. q-QualMinLP-WUS, which is used by UE supporting LP-WUS capability, wherein the value of the q-QualMinLP-WUS parameter is not less than the q-QualMin value broadcast in SIB4;

2. The UE supporting LP-WUS capability evaluates the cell selection criteria of the serving cell and the neighbor cell based on the information related to the serving cell and the information related to the neighbor cell in the system message broadcast. Specific:
S Criterion:

$$\text{Srxlev}>0 \text{ and } \text{Squal}>0;$$

Srxlev = Qrxlevmeas - (Qrxlevmin + Qrxlevminoffset)- Pcompensation - Qoffsettemp;

$$\text{Squal} = \text{Qqualmeas} - (\text{Qqualmin} + \text{Qqualminoffset}) - \text{Qoffsettemp}.$$

a. For the serving cell:

i. For UE supporting LP-WUS capability, if q-RxLevMinLP-WUS is configured in SIB1, Qrxlevmin is obtained from q-RxLevMinLP-WUS in SIB1; otherwise, Qrxlevmin is obtained from q-RxLevMin. If q-QualMinLP-WUS is configured in SIB1, Qqualmin is obtained from q-QualMinLP-WUS in SIB1; otherwise, Qqualmin is obtained from q-QualMin.

b. For an intra-frequency neighbor cell:

i. For UE supporting LP-WUS capability, if q-RxLevMinLP-WUS is configured in SIB2, Qrxlevmin is obtained from q-RxLevMinLP-WUS; otherwise, Qrxlevmin is obtained from q-RxLevMin in SIB2. If q-QualMinLP-WUS is configured in SIB2, Qqualmin is obtained from q-QualMinLP-WUS in SIB2; otherwise, Qqualmin is obtained from q-QualMin.

b. For an inter-frequency neighbor cell:

i. For UE supporting LP-WUS capability, if q-RxLevMinLP-WUS is configured in SIB4, Qrxlevmin is obtained from q-RxLevMinLP-WUS; otherwise, Qrxlevmin is obtained from q-RxLevMin in SIB4. If q-QualMinLP-WUS is configured in SIB4, Qqualmin is obtained from q-QualMinLP-WUS in SIB4; otherwise, Qqualmin is obtained from q-QualMin.

For the q-RxLevMinLP-WUS and q-QualMinLP-WUS parameters broadcast in SIB1/SIB2/SIB4, the values thereof may be absolute values, which means replacing q-RxLevMin and q-QualMin broadcast in SIB1/SIB2/SIB4; or the values thereof may be relative values, that is, offsets from q-RxLevMin and q-QualMin broadcast in SIB1/SIB2/SIB4.
In the embodiments of the present disclosure, the cell selection criterion unique to LP-WUS is introduced, so that UE with LP-WUS capability can evaluate which cells meet the coverage of LP-WUS signals, and such selected cells help the UE to operate in the LP-WUS mode and achieve the purpose of saving power by turning off the primary receiver.
Embodiment 2: Cell selection procedure of LP-WUS UE.
In the cell selection process, the UE supporting LP-WUS capability preferentially selects a cell that satisfies an LP-WUS cell selection criterion. Specifically, in the cell search phase, when the measured cell signal strength and/or signal

quality satisfies the LP-WUS cell selection criterion, the UE selects the current cell as the serving cell to camp. If the current cell does not satisfy the LP-WUS cell selection criterion, the search for other cells is continued to find a cell that satisfies the LP-WUS cell selection criterion. If all cells do not satisfy the LP-WUS cell selection criterion, the cell for camping is selected according to the conventional cell selection criteria.

Embodiment 3: Cell reselection procedure of LP-WUS UE.

The UE supporting LP-WUS capability considers the LP-WUS cell selection criterion and/or the legacy cell selection criterion in the cell reselection procedure. Specific:

Among measured neighbor cells,

1) If the signal strength and/or signal quality of some neighbor cells satisfy the LP-WUS cell selection criterion, the UE determines the target cell of cell reselection among those neighbor cells satisfying the LP-WUS cell selection criterion. For example, the terminal firstly determines the neighbor cells satisfying the LP-WUS cell selection criterion, and then sorts cells according to the cell reselection criterion among these neighbor cells, and selects a cell with the highest ranking or the largest number of good quality beams among n cells with higher ranking as the target cell according to the prior art.

2) Otherwise, the terminal performs the cell reselection procedure according to the traditional cell selection criterion.

In the embodiments of the present disclosure, a two-tier cell reselection procedure is introduced, and UE with LP-WUS capability can prioritize reselection to a target cell that supports the UE to operate in the LP-WUS mode through evaluation of the LP-WUS cell selection criterion, thereby achieving the purpose of power saving.

Embodiment 4: A separate LP-WUS-related cell specific offset is introduced for a neighbor cell.

1. UE receives a system message broadcast and obtains cell specific offset information related to the LP-WUS of a neighbor cell;

2. The UE supporting LP-WUS considers the cell specific offset information related to LP-WUS when evaluating whether the neighbor cell satisfies the S criterion.

Specifically, each neighbor cell defines a cell specific offset related to LP-WUS, for example, $Q_{rxlevminoffsetcellLP\text{-}WUS}$ and/or $Q_{qualminoffsetcellLP\text{-}WUS}$, which is configured by SIB3 for an intra-frequency neighbor cell and configured by SIB4 for an inter-frequency neighbor cell. For UE supporting LP-WUS, when evaluating whether a neighbor cell satisfies the LP-WUS cell selection criterion, if QrxlevminoffsetcellLP-WUS is configured for the neighbor cell in SIB3/4, the Qrxlevmin obtained by Embodiment 1 needs to be added with the $Q_{rxlevminoffsetcellLP\text{-}WUS}$ value configured for the neighbor cell, and the Qqualmin obtained by Embodiment 1 needs to added with the $Q_{qualminoffsetcellLP\text{-}WUS}$ value configured for the neighbor cell.

In the Embodiments 1-3, the cell selection criterion parameters of a terminal are all at the frequency-point level, such as intra-frequency or inter-frequency, without further distinguishing the cell level. In the Embodiment 4, the introduction of the LP-WUS cell selection criterion parameter at cell level can facilitate the network to more flexibly adapt to factors such as the difference in LP-WUS signal transmission power and the difference in coverage of each neighbor cell, so that the terminal can more accurately determine whether the terminal is in the effective coverage area of the LP-WUS of each neighbor cell.

The preferred embodiments of the present disclosure have been described in detail above with reference to the accompanying drawings, but the present disclosure is not limited to the specific details in the above-described embodiments. Within the scope of the technical concept of the present disclosure, various simple modifications can be made to the technical solutions of the present disclosure, and these simple modifications all fall within the scope of protection of the present disclosure. For example, various specific technical features described in the above-described detailed description can be combined in any suitable manner without contradiction, and various possible combinations will not be described separately in the present disclosure in order to avoid unnecessary repetition. For example, various embodiments of the present disclosure may be combined arbitrarily, and as long as they do not violate the idea of the present disclosure, they should also be regarded as the disclosure of the present disclosure. For another example, on the premise that there is no conflict, each embodiment described in the present disclosure and/or the technical features in each embodiment can be arbitrarily combined with the prior art, and the technical solution obtained after the combination should also fall within the scope of protection of the present disclosure.

It should also be understood that in various method embodiments of the present disclosure, the size of the sequence number of the above-described processes does not mean the sequence of execution, and the sequence of execution of each process should be determined by its function and internal logic, and should not constitute any limitation on the implementation of the embodiments of the present disclosure. In addition, in the embodiments of the present disclosure, the terms "downlink", "uplink", and "sidelink" are used to indicate the transmission direction of signals or data, where "downlink" is used to indicate that the transmission direction of signals or data is a first direction from a site to UE of a

cell, "uplink" is used to indicate that the transmission direction of signals or data is a second direction from the UE of the cell to the site, and "sidelink" is used to indicate that the transmission direction of signals or data is a third direction from UE 1 to UE 2. For example, "downlink signal" indicates that the transmission direction of signals is the first direction. In addition, in the embodiments of the present disclosure, the term "and/or" only describes an association relationship between associated objects, and indicates that there may be three types of relationships. Specifically, A and/or B may represent three cases which are A alone, A and B simultaneously, and B alone. In addition, the character "/" generally indicates that the related objects before and after are in an "or" relationship.

FIG. 9 is a schematic diagram of the structure and composition of a terminal device according to an embodiment of the present disclosure. As shown in FIG. 9, the terminal device 900 includes:
a first communication unit 901, configured to receive a first parameter configured by a network device, the first parameter being used for selecting or reselecting a first target cell, the first target cell being related to an LP-WUS.

In some embodiments, the first target cell meets an LP-WUS coverage condition, or meets a received signal quality requirement and/or a received signal strength requirement of the LP-WUS.

In some embodiments, the first communication unit 901 is further configured to receive, through a system message sent by the network device, the first parameter configured by the network device.

In some embodiments, the first parameter of a serving cell may be configured by SIB1.

In some embodiments, the first parameter of an intra-frequency neighbor cell may be configured by SIB2.

In some embodiments, the first parameter of an inter-frequency neighbor cell may be configured by SIB4.

In some embodiments, the first parameter is used to indicate one or both of:
an RSRP threshold for reception of the LP-WUS and an RSRQ threshold for reception of the LP-WUS.

In some embodiments, the first parameter may include one or both of:
the RSRP threshold for reception of the LP-WUS and the RSRQ threshold for reception of the LP-WUS.

In some embodiments, the first parameter may include one or both of:

an RSRP threshold offset between an RSRP threshold for reception of a first signal and the RSRP threshold for reception of the LP-WUS, the first signal being a non-LP-WUS signal; and
an RSRQ threshold offset between an RSRQ threshold for reception of the first signal and the RSRQ threshold for reception of the LP-WUS.

In some embodiments, the terminal device 901 may further include a first determining unit configured to perform cell selection or cell reselection based on the first parameter to determine the first target cell.

In some embodiments, the determining unit is further configured to determine, among the searched cells, a cell satisfying a first criterion as the first target cell, the first criterion being an S criterion based on the first parameter of the serving cell.

In some embodiments, the determining unit is further configured to determine the first target cell from one or more neighbor cells satisfying a second criterion, the second criterion being an S criterion based on the first parameter of neighbor cell(s).

In some embodiments, for a first neighbor cell among the one or more neighbor cells, the second criterion used by the first neighbor cell may be determined based on the first parameter of neighbor cell(s) and cell offset information of the first neighbor cell.

In some embodiments, the cell offset information is used to indicate one or both of: an RSRP offset, and an RSRQ offset.

In some embodiments, the first communication unit 901 is further configured to receive cell offset information configured by the network device for a neighbor cell of the terminal device.

In some embodiments, the cell offset information of an intra-frequency neighbor cell may be configured in SIB2.

In some embodiments, the cell offset information of an inter-frequency neighbor cell may be configured in SIB4.

In some embodiments, the first parameter of the serving cell is used to determine whether to start intra-frequency measurement and/or to start inter-frequency measurement of the same priority or low priority.

In some embodiments, the terminal device may further include: a second determining unit configured to, in case of not determining the first target cell by the terminal device based on the first parameter, perform cell selection or cell reselection based on the second parameter to determine a second target cell, the second target cell being unrelated to the LP-WUS.

In some embodiments, the terminal device may further include: a second determining unit configured to, in case of the terminal device not being configured with the first parameter, perform cell selection or cell reselection based on the second parameter to determine a second target cell, the second target cell being unrelated to the LP-WUS.

In some embodiments, the first communication unit 901 is further configured to receive the second parameter configured by the network device and sent by the network device through a system message.

In some embodiments, the second parameter is used to indicate one or both of:

an RSRP threshold for reception of a first signal, and an RSRQ threshold for reception of the first signal, the first signal being a non-LP-WUS.

The first communication unit in the terminal device may be implemented by a transceiver of the terminal device. The first determination unit and the second determination unit of the terminal device may be implemented by a processor in the terminal device.

FIG. 10 is a schematic diagram of the structure and composition of a network device according to an embodiment of the present disclosure. As shown in FIG. 10, the network device 1000 includes:
a second communication unit 1001, configured to configure a first parameter to a terminal device, the first parameter being used for selecting or reselecting a first target cell, the first target cell being related to an LP-WUS.

In some embodiments, the first target cell meets an LP-WUS coverage condition, or meets a received signal quality requirement and/or a received signal strength requirement of the LP-WUS.

In some embodiments, the second communication unit is further configured to configure the first parameter to the terminal device through a system message.

In some embodiments, the first parameter of a serving cell may be configured by SIB1.

In some embodiments, the first parameter of an intra-frequency neighbor cell may be configured by SIB2.

In some embodiments, the first parameter of an inter-frequency neighbor cell may be configured by SIB4.

In some embodiments, the first parameter is used to indicate one or both of:
an RSRP threshold for reception of the LP-WUS, and an RSRQ threshold for reception of the LP-WUS.

In some embodiments, the first parameter comprises one or both of:
the RSRP threshold for reception of the LP-WUS, and the RSRQ threshold for reception of the LP-WUS.

In some embodiments, the first parameter may include one or both of:

an RSRP threshold offset between an RSRP threshold for reception of a first signal and the RSRP threshold for reception of the LP-WUS, the first signal being a non-LP-WUS signal; and
an RSRQ threshold offset between an RSRQ threshold for reception of the first signal and the RSRQ threshold for reception of the LP-WUS.

In some embodiments, the first target cell is a cell that satisfies a first criterion among cells searched by the terminal device, and the first criterion is an S criterion based on the first parameter of the serving cell.

In some embodiments, the first target cell may be determined from one or more neighbor cells that satisfy a second criterion, the second criterion being an S criterion based on the first parameter of neighbor cell(s).

In some embodiments, for a first neighbor cell among the one or more neighbor cells, the second criterion used by the first neighbor cell may be determined based on the first parameter of neighbor cell(s) and cell offset information of the first neighbor cell.

In some embodiments, the cell offset information is used to indicate one or both of: an RSRP offset, and an RSRQ offset.

In some embodiments, the second communication unit 1001 is further configured to configure the terminal device with cell offset information for a neighbor cell of the terminal device.

In some embodiments, the cell offset information of an intra-frequency neighbor cell may be configured in SIB2.

In some embodiments, the cell offset information of an inter-frequency neighbor cell may be configured in SIB4.

In some embodiments, the first parameter of the serving cell is used to determine whether to start intra-frequency measurement and/or to start inter-frequency measurement of the same priority or low priority.

In some embodiments, the second communication unit 1001 is further configured to configure a second parameter to the terminal device, the second parameter being used to determine a second target cell, the second target cell being unrelated to the LP-WUS.

In some embodiments, a condition for the second parameter for determining the second target cell may include:

the terminal device being configured with the first parameter, and the terminal device not determining the first target cell based on the first parameter; and/or,
the terminal device being not configured with the first parameter.

In some embodiments, the second communication unit 1001 is further configured to configure the second parameter to the terminal device through a system message.

In some embodiments, the second parameter is used to indicate one or both of:
an RSRP threshold for reception of a first signal, and an RSRQ threshold for reception of the first signal, the first signal being a non-LP-WUS.

It is understood that the network device may further include a third determination unit configured to determine the first parameter.

The second communication unit of the network device may be implemented by a transceiver of the network device. The third determination unit of the network device may be implemented by a processor of the network device.

Those skilled in the art should understand that the related description of the above-described terminal device or network device according to the embodiments of the present disclosure can be understood with reference to the related description of the methods of cell selection or reselection according to the embodiments of the present disclosure.

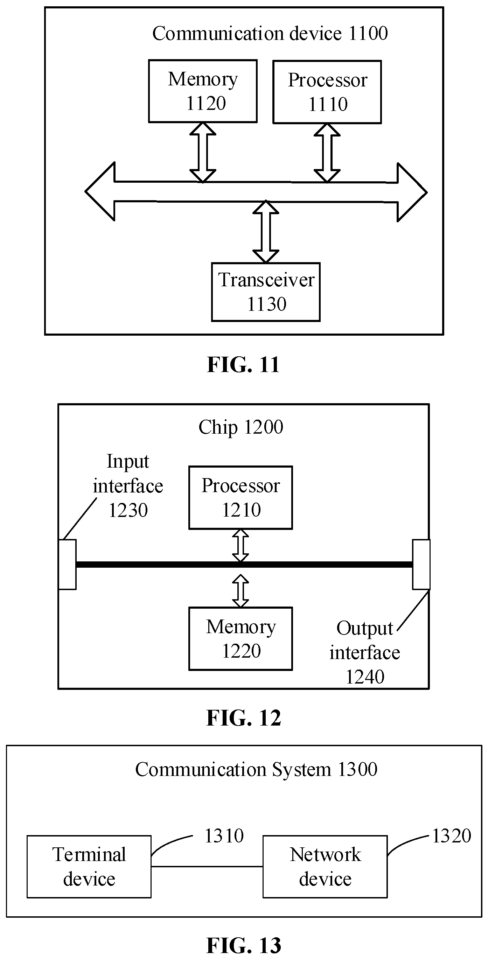

FIG. 11 is a schematic structural diagram of a communication device 1100 according to an embodiment of the present disclosure. The communication device may be a terminal device or a network device. The communication device 1100 illustrated in FIG. 11 includes a processor 1110, and the processor 1110 can call and run a computer program from a memory to implement the methods in the embodiments of the present disclosure.

Optionally, as shown in FIG. 11, the communication device 1100 may further include a memory 1120. The processor 1110 may call and run a computer program from the memory 1120 to implement the methods in the embodiments of the present disclosure.

The memory 1120 may be a separate device independent of the processor 1110, or may be integrated in the processor 1110.

Optionally, as shown in FIG. 11, the communication device 1100 may further include a transceiver 1130, and the processor 1110 may control the transceiver 1130 to communicate with other devices, specifically, may transmit information or data to other devices, or receive information or data transmitted by other devices.

Here, the transceiver 1130 may include a transmitter and a receiver. The transceiver 1130 may further include antennas, and the number of antennas may be one or more.

Optionally, the communication device 1100 may be the network device according to the embodiments of the present disclosure, and the communication device 1100 may implement a corresponding process implemented by the network device in each method according to the embodiments of the present disclosure, and will not be described herein for the sake of conciseness.

Optionally, the communication device 1100 may specifically be a mobile terminal/terminal device according to the embodiments of the present disclosure, and the communication device 1100 may implement a corresponding process implemented by the mobile terminal/terminal device in each method according to the embodiments of the present disclosure, and will not be repeated here for the sake of conciseness.

FIG. 12 is a schematic structural diagram of a chip according to an embodiment of the present disclosure. The chip 1200 shown in FIG. 12 includes a processor 1210, and the processor 1210 can call and run a computer program from a memory to implement the methods in the embodiments of the present disclosure.

Optionally, as shown in FIG. 12, the chip 1200 may further include a memory 1220. The processor 1210 may call and run a computer program from the memory 1220 to implement the methods in the embodiments of the present disclosure.

The memory 1220 may be a separate device independent of the processor 1210 or may be integrated in the processor 1210.

Optionally, the chip 1200 may further include an input interface 1230. The processor 1210 may control the input interface 1230 to communicate with other devices or chips, specifically, may acquire information or data transmitted by other devices or chips.

Optionally, the chip 1200 may further include an output interface 1240. The processor 1210 may control the output interface 1240 to communicate with other devices or chips, specifically, may output information or data to other devices or chips.

Optionally, the chip can be applied to the network device in the embodiments of the present disclosure, and the chip can implement the corresponding process implemented by the network device in each method of the embodiments of the present disclosure. The description thereof will not be repeated here for the sake of brevity.

Optionally, the chip can be applied to the mobile terminal/terminal device in the embodiments of the present disclosure, and the chip can implement the corresponding flow implemented by the mobile terminal/terminal device in each method of the embodiments of the present disclosure. The description thereof will not be repeated for the sake of brevity.

It should be understood that the chip mentioned in the embodiments of the present disclosure may also be referred to as a system-level chip, a system chip, a chip system, a system-on-chip, or the like.

FIG. 13 is a schematic block diagram of a communication system 1300 according to an embodiment of the present disclosure. As shown in FIG. 13, the communication system 1300 includes a terminal device 1310 and a network device 1320.

The terminal device 1310 may be used to implement the corresponding functions implemented by the terminal device in the above-described methods, and the network device 1320 may be used to implement the corresponding functions implemented by the network device in the above-described methods, and the description thereof will not be repeated here for the sake of brevity.

It should be understood that the processor of the embodiments of the present disclosure may be an integrated

circuit chip having signal processing capabilities. In the implementation process, the steps of the above-described method embodiments may be completed by integrated logic circuits of hardware in the processor or instructions in the form of software. The processor described above may be a general-purpose processor, a Digital Signal Processor (DSP), an Application Specific Integrated Circuit (ASIC), an off-the-shelf Field Programmable Gate Array (FPGA) or other programmable logic device, a discrete gate or transistor logic device, or a discrete hardware component. The methods, steps, and logical block diagrams disclosed in the embodiments of the present disclosure may be implemented or executed. The general-purpose processor may be a microprocessor or the processor may be any conventional processor or the like. The steps of the method disclosed in connection with the embodiments of the present disclosure may be directly executed by a hardware decoding processor, or may be executed by combining hardware and software modules in the decoding processor. The software module may be located in a storage medium mature in the art, such as random access memory, flash memory, read-only memory, programmable read-only memory, or electrically erasable and writable programmable memory, registers, etc. The storage medium is located in the memory, and the processor may read the information from the memory, and combine its hardware to complete the steps of the above methods.

It is understood that the memory in the embodiments of the present disclosure may be a volatile memory or a non-volatile memory, or may include both volatile and non-volatile memory. The non-volatile memory may be a Read-Only Memory (ROM), a Programmable ROM (PROM), an Erasable PROM (EPROM), an Electrically EPROM (EEPROM), or a flash memory. The volatile memory may be a Random Access Memory (RAM), which serves as an external cache. By way of illustration, but not by way of limitation, many forms of RAM are available, such as Static RAM (SRAM), Dynamic RAM (DRAM), Synchronous DRAM (SDRAM), Double Data Rate SDRAM (DDR SDRAM), Enhanced SDRAM (ESDRAM), Synchlink DRAM (SLDRAM), and Direct Rambus RAM (DR RAM). It should be noted that the memory of the systems and methods described herein is intended to include, but is not limited to, these and any other suitable type of memory.

It should be understood that the above memory is illustrative but not limiting, for example, the memory in the embodiments of the present disclosure may also be a static random access memory (SRAM), a dynamic random access memory (DRAM), a synchronous dynamic random access memory (SDRAM), a double data rate synchronous dynamic random access memory (DDR SDRAM), an enhanced SDRAM (ESDRAM), a synch link dynamic random access memory (SLDRAM), a Direct Rambus RAM (DR RAM), and the like. That is, the memory in the embodiments of the present disclosure is intended to include, but is not limited to, these and any other suitable type of memory.

Embodiments of the present disclosure also provide a computer-readable storage medium for storing a computer program.

Optionally, the computer-readable storage medium may be applied to the network device in the embodiments of the present disclosure, and the computer program may cause the computer to execute the corresponding flow implemented by the network device in each method in the embodiments of the present disclosure, and the description thereof will not be repeated here for the sake of brevity.

Optionally, the computer-readable storage medium may be applied to the mobile terminal/terminal device in the embodiments of the present disclosure, and the computer program may cause the computer to execute the corresponding flow implemented by the mobile terminal/terminal device in each method of the embodiments of the present disclosure, and will not be repeated here for the sake of brevity.

Embodiments of the present disclosure also provide a computer program product including computer program instructions.

Optionally, the computer program product may be applied to the network device in the embodiments of the present disclosure, and the computer program instruction may cause the computer to execute the corresponding flow implemented by the network device in each method in the embodiments of the present disclosure, and the description thereof is not repeated here for the sake of brevity.

Optionally, the computer program product may be applied to the mobile terminal/terminal device in the embodiments of the present disclosure, and the computer program instructions may cause the computer to execute the corresponding flow implemented by the mobile terminal/terminal device in each method of the embodiments of the present disclosure, and the description thereof will not be repeated for brevity.

Embodiments of the present disclosure also provide a computer program.

Optionally, the computer program may be applied to the network device in the embodiments of the present disclosure, and when the computer program is run on the computer, the computer may execute the corresponding process implemented by the network device in each method of the embodiments of the present disclosure, and the description thereof is not repeated here for the sake of brevity.

Optionally, the computer program may be applied to the mobile terminal/terminal device in the embodiments of the present disclosure, and when the computer program is run on the computer, the computer may execute the corresponding flow implemented by the mobile terminal/terminal device in each method of the embodiments of the present disclosure, which is not repeated here for the sake of brevity.

Those of ordinary skill in the art will appreciate that the elements and algorithmic steps of the various examples described in connection with the embodiments herein can be implemented in electronic hardware, or a combination of

computer software and electronic hardware. Whether these functions are performed in hardware or software depends on the specific application and design constraints of the technical solution. Those skilled in the art may use different methods for implementing the described functions for each particular application, and such implementations should not be considered beyond the scope of the present disclosure.

Those skilled in the art can clearly understand that for convenience and conciseness of the description, the specific working processes of the systems, devices, and units described above may refer to the corresponding processes in the aforementioned method embodiments, and will not be repeatedly described herein.

In several embodiments provided herein, it should be understood that the described systems, apparatuses, and methods may be implemented in other ways. For example, the device embodiments described above are merely schematic, for example, the division of units is only a logical functional division, and there may be other division methods in actual implementation, for example, multiple units or components may be combined or integrated into another system, or some features may be ignored or not implemented. In addition, the coupling or direct coupling or communication connection between each other shown or discussed may be an indirect coupling or communication connection through some interface, device or unit, which may be electrical, mechanical or the like.

The units described as separate units may be or may not be physically separate, and the units displayed as units may be or may not be physical units, that is, they may be located in one place or may be distributed over a plurality of network units. Some or all of the units may be selected according to actual needs to achieve the purpose of the solution of the embodiments.

In addition, each functional unit in each embodiment of the present disclosure may be integrated in one processing unit, each unit may be physically present alone, or two or more units may be integrated in one unit.

The functions may be stored in a computer-readable storage medium if implemented in the form of software functional units and sold or used as independent products. Based on this understanding, the technical solution of the present disclosure essentially or partially contributing to the related art or a part of the technical solution may be embodied in the form of a software product, which is stored in a storage medium and includes several instructions for causing a computer device (which may be a personal computer, a server, or a network device, etc.) to perform all or part of the steps of the methods described in various embodiments of the present disclosure. The storage medium includes a USB disk, a removable hard disk, a Read-Only Memory (ROM), a Random Access Memory (RAM), a magnetic disk, or an optical disk that can store a program code.

The above are merely specific embodiments of the present disclosure, and the scope of protection of the present disclosure is not limited thereto. Any person skilled in the art can easily think of changes or substitutions within the technical scope described in the present disclosure, and should be covered within the scope of protection of the present disclosure. Therefore, the scope of protection of the present disclosure should be subject to the scope of protection of the claims.

## Claims

**1.** A method of cell selection or reselection, comprising:
receiving, by a terminal device, a first parameter configured by a network device, the first parameter being used for selecting or reselecting a first target cell, the first target cell being related to a low power wake-up signal (LP-WUS).

**2.** The method of claim 1, wherein the first target cell meets an LP-WUS coverage condition, or meets a received signal quality requirement and/or a received signal strength requirement of the LP-WUS.

**3.** The method of claim 1 or 2, wherein receiving, by the terminal device, the first parameter configured by the network device comprises:
receiving, by the terminal device, the first parameter configured by the network device and sent by the network device through a system message.

**4.** The method of claim 3, wherein the first parameter of a serving cell is configured by system information block (SIB)1.

**5.** The method of claim 3, wherein the first parameter of an intra-frequency neighbor cell is configured by SIB2.

**6.** The method of claim 3, wherein the first parameter of an inter-frequency neighbor cell is configured by SIB4.

**7.** The method of any one of claims 1 to 6, wherein the first parameter is used to indicate one or both of:
a reference signal reception power (RSRP) threshold for reception of the LP-WUS, and a reference signal reception quality (RSRQ) threshold for reception of the LP-WUS.

**8.** The method of claim 7, wherein the first parameter comprises one or both of:
the RSRP threshold for reception of the LP-WUS, and the RSRQ threshold for reception of the LP-WUS.

**9.** The method of claim 7, wherein the first parameter comprises one or both of:

an RSRP threshold offset between an RSRP threshold for reception of a first signal and the RSRP threshold for reception of the LP-WUS, the first signal being a non-LP-WUS signal; and
an RSRQ threshold offset between an RSRQ threshold for reception of the first signal and the RSRQ threshold for reception of the LP-WUS.

**10.** The method of any one of claims 1 to 9, further comprising:
performing, by the terminal device, cell selection or cell reselection based on the first parameter to determine the first target cell.

**11.** The method of claim 10, wherein performing, by the terminal device, cell selection or cell reselection based on the first parameter to determine the first target cell comprises:
determining, by the terminal device, a cell satisfying a first criterion among searched cells as the first target cell, the first criterion being an S criterion based on the first parameter of the serving cell.

**12.** The method of claim 10, wherein performing, by the terminal device, cell selection or cell reselection based on the first parameter to determine the first target cell comprises:
determining, by the terminal device, the first target cell from one or more neighbor cells satisfying a second criterion, the second criterion being an S criterion based on the first parameter of neighbor cell(s).

**13.** The method of claim 12, wherein for a first neighbor cell among the one or more neighbor cells, the second criterion used by the first neighbor cell is determined based on the first parameter of neighbor cell(s) and cell offset information of the first neighbor cell.

**14.** The method of claim 13, wherein the cell offset information is used to indicate one or both of: an RSRP offset, and an RSRQ offset.

**15.** The method of claim 13 or 14, further comprising:
receiving, by the terminal device, cell offset information configured by the network device for a neighbor cell of the terminal device.

**16.** The method of claim 15, wherein the cell offset information of an intra-frequency neighbor cell is configured in SIB3.

**17.** The method of claim 15, wherein the cell offset information of an inter-frequency neighbor cell is configured in SIB4.

**18.** The method according to any one of claims 1 to 17, wherein the first parameter of a serving cell is used to determine whether to start intra-frequency measurement, and/or to start inter-frequency measurement of same priority or low priority.

**19.** The method of any one of claims 1 to 18, further comprising:
in case of not determining the first target cell by the terminal device based on the first parameter, performing, by the terminal device, cell selection or cell reselection based on a second parameter to determine a second target cell, the second target cell being unrelated to the LP-WUS.

**20.** The method of any one of claims 1 to 19, further comprising:
in case of the terminal device not being configured with the first parameter, performing, the terminal device, cell selection or cell reselection based on a second parameter to determine a second target cell, the second target cell being unrelated to the LP-WUS.

**21.** The method of claim 19 or 20, further comprising:
receiving, by the terminal device, the second parameter configured by the network device and sent by the network device through a system message.

**22.** The method of any one of claims 19 to 21, wherein the second parameter is used to indicate one or both of:

an RSRP threshold for reception of a first signal, and an RSRQ threshold for reception of the first signal, the first signal being a non-LP-WUS.

**23.** A method of cell selection or reselection, comprising:
configuring, by a network device, a first parameter to a terminal device, the first parameter being used for selecting or reselecting a first target cell, the first target cell being related to a low power wake-up signal (LP-WUS).

**24.** The method of claim 23, wherein the first target cell meets an LP-WUS coverage condition, or meets a received signal quality requirement and/or a received signal strength requirement of the LP-WUS.

**25.** The method of claim 23 or 24, wherein configuring the first parameter to the terminal device by the network device comprises:
configuring, by the network device, the first parameter to the terminal device through a system message.

**26.** The method of claim 25, wherein the first parameter of a serving cell is configured by system information block (SIB)1.

**27.** The method of claim 25, wherein the first parameter of an intra-frequency neighbor cell is configured by SIB2.

**28.** The method of claim 25, wherein the first parameter of an inter-frequency neighbor cell is configured by SIB4.

**29.** The method of any one of claims 23 to 28, wherein the first parameter is used to indicate one or both of:
a reference signal reception power (RSRP) threshold for reception of the LP-WUS, and a reference signal reception quality (RSRQ) threshold for reception of the LP-WUS.

**30.** The method of claim 29, wherein the first parameter comprises one or both of:
the RSRP threshold for reception of the LP-WUS, and the RSRQ threshold for reception of the LP-WUS.

**31.** The method of claim 29, wherein the first parameter comprises one or both of:

an RSRP threshold offset between an RSRP threshold for reception of a first signal and the RSRP threshold for reception of the LP-WUS, the first signal being a non-LP-WUS signal; and
an RSRQ threshold offset between an RSRQ threshold for reception of the first signal and the RSRQ threshold for reception of the LP-WUS.

**32.** The method according to any one of claims 23 to 31, wherein the first target cell is a cell that satisfies a first criterion among cells searched by the terminal device, and the first criterion is an S criterion based on the first parameter of a serving cell.

**33.** The method of any one of claims 23 to 31, wherein the first target cell is determined from one or more neighbor cells satisfying a second criterion, the second criterion being an S criterion based on the first parameter of neighbor cell(s).

**34.** The method of claim 33, wherein for a first neighbor cell among the one or more neighbor cells, the second criterion used by the first neighbor cell is determined based on the first parameter of neighbor cell(s) and cell offset information of the first neighbor cell.

**35.** The method of claim 34, wherein the cell offset information is used to indicate one or both of: an RSRP offset, and an RSRQ offset.

**36.** The method of claim 34 or 35, further comprising:
configuring, by the network device, the terminal device with cell offset information for a neighbor cell of the terminal device.

**37.** The method of claim 36, wherein the cell offset information of an intra-frequency neighbor cell is configured in SIB3.

**38.** The method of claim 36, wherein the cell offset information of an inter-frequency neighbor cell is configured in SIB4.

**39.** The method according to any one of claims 23 to 38, wherein the first parameter of a serving cell is used to determine whether to start intra-frequency measurement, and/or to start inter-frequency measurement of same priority or low

priority.

**40.** The method of any one of claims 23 to 39, further comprising:
configuring, by the network device, a second parameter to the terminal device, the second parameter being used to determine a second target cell that is unrelated to the LP-WUS.

**41.** The method of claim 40, wherein a condition for the second parameter for determining the second target cell comprises:

the terminal device being configured with the first parameter, and the terminal device not determining the first target cell based on the first parameter; and/or,
the terminal device being not configured with the first parameter.

**42.** The method of claim 40 or 41, wherein configuring, by the network device, the second parameter to the terminal device comprises:
configuring, by the network device, the second parameter to the terminal device through a system message.

**43.** The method of any one of claims 40 to 42, wherein the second parameter is used to indicate one or both of:
an RSRP threshold for reception of a first signal, and an RSRQ threshold for reception of the first signal, the first signal being a non-LP-WUS.

**44.** A terminal device, comprising:
a first communication unit, configured to receive a first parameter configured by a network device, the first parameter being used for selecting or reselecting a first target cell, the first target cell being related to a low power wake-up signal (LP-WUS).

**45.** A network device, comprising:
a second communication unit, configured to configure a first parameter to a terminal device, the first parameter being used for selecting or reselecting a first target cell, the first target cell being related to a low power wake-up signal (LP-WUS).

**46.** A terminal device, comprising: a memory for storing a computer program, and a processor for invoking and executing the computer program stored in the memory to perform the method of any one of claims 1 to 22.

**47.** A network device, comprising: a memory for storing a computer program, and a processor for invoking and executing the computer program stored in the memory to perform the method of any one of claims 23 to 43.

**48.** A chip, comprising: a processor for invoking and executing a computer program from a memory to cause a device on which the chip is mounted to perform the method of any one of claims 1 to 22 or perform the method of any one of claims 23 to 43.

**49.** A computer-readable storage medium, having stored a computer program thereon that, when run, causes a computer to perform the method of any one of claims 1 to 22, or perform the method of any one of claims 23 to 43.

**50.** A computer program product, comprising computer program instructions that, when run, causes a computer to perform the method of any one of claims 1 to 22, or perform the method of any one of claims 23 to 43.

**51.** A computer program, when run, causing a computer to perform the method of any one of claims 1 to 22 or perform the method of any one of claims 23 to 43.

100
130
110
120
110

FIG. 1

UE200
Primary receiver 201 (Off or Deep Sleep)
Trigger
Wake-up signal (off)
LP wake-up receiver 202

FIG. 2

UE200
Primary receiver 201 (ON)
Trigger
Wake-up signal (on)
LP wake-up receiver 202

**FIG. 3**

A terminal device receives a first parameter configured by a network device, the first parameter being used for selecting or reselecting a first target cell, the first target cell being related to an LP-WUS

S401

**FIG. 4**

A network device configures a first parameter to a terminal device, the first parameter being used for selecting or reselecting a first target cell, the first target cell being related to an LP-WUS

S501

**FIG. 5**

A terminal device receives a first parameter configured by a network device, the first parameter being used for selecting or reselecting a first target cell, the first target cell being related to an LP-WUS
S401
The terminal device performs cell selection or cell reselection based on the first parameter to determine the first target cell
S402

**FIG. 6**

The terminal device receives cell offset information configured by the network device for a neighbor cell of the terminal device
403
The terminal device receives a first parameter configured by the network device, the first parameter being used for selecting or reselecting a first target cell, the first target cell being related to an LP-WUS
S401
The terminal device performs cell selection or cell reselection based on the first parameter to determine the first target cell
S402

**FIG. 7**

The network device configures the terminal device with cell offset information for a neighbor cell of the terminal device
S502
The network device configures a first parameter to the terminal device, the first parameter being used for selecting or reselecting a first target cell, the first target cell being related to an LP-WUS
S501

**FIG. 8**

Terminal device 900
First communication unit 901

**FIG. 9**

Network Device 900
Second communication unit 901

**FIG. 10**

Communication device 1100
Memory 1120
Processor 1110
Transceiver 1130

**FIG. 11**

Chip 1200
Input interface 1230
Processor 1210
Memory 1220
Output interface 1240

**FIG. 12**

Communication System 1300
1310
1320
Terminal device
Network device

**FIG. 13**

## INTERNATIONAL SEARCH REPORT

International application No.
**PCT/CN2023/133407**

**A. CLASSIFICATION OF SUBJECT MATTER**

H04W 36/08(2009.01)i

According to International Patent Classification (IPC) or to both national classification and IPC

**B. FIELDS SEARCHED**

Minimum documentation searched (classification system followed by classification symbols)

IPC: H04W

Documentation searched other than minimum documentation to the extent that such documents are included in the fields searched

Electronic data base consulted during the international search (name of data base and, where practicable, search terms used)

CNTXT; ENTXTC; CNKI; DWPI; ENTXT; 3GPP: 低功率, 低功耗, 唤醒, 唤醒无线电, 唤醒电路, 低功耗电路, 唤醒接收机, 小区, 接入点, 选择, 重选; low 1d power, receiv+, wake, wake-up, lp 1d wus, lp 1d wur, rsrp, rsrq, reselect+, re-select+, select+, cell, sib

**C. DOCUMENTS CONSIDERED TO BE RELEVANT**

| Category* | Citation of document, with indication, where appropriate, of the relevant passages | Relevant to claim No. |
|---|---|---|
| X | US 2022070766 A1 (INTERDIGITAL PATENT HOLDINGS, INC.) 03 March 2022 (2022-03-03)<br>description, paragraphs 2, 3, 91, and 125-169, and figure 14 | 1, 2, 10, 23, 24, 44-51 |
| Y | US 2022070766 A1 (INTERDIGITAL PATENT HOLDINGS, INC.) 03 March 2022 (2022-03-03)<br>description, paragraphs 2, 3, 91, and 125-169, and figure 14 | 3-9, 11-22, 25-43 |
| Y | WO 2023039829 A1 (GUANGDONG OPPO MOBILE TELECOMMUNICATIONS CORP., LTD.) 23 March 2023 (2023-03-23)<br>description, page 5, line 37-page 13, line 2, and figures 1-7 | 3-9, 11-22, 25-43 |
| A | CN 117082587 A (VIVO MOBILE COMMUNICATION CO., LTD.) 17 November 2023 (2023-11-17)<br>entire document | 1-51 |
| A | WO 2018063340 A1 (GUPTA HYDE MARUTI et al.) 05 April 2018 (2018-04-05)<br>entire document | 1-51 |

☑ Further documents are listed in the continuation of Box C. ☑ See patent family annex.

* Special categories of cited documents:
- "A" document defining the general state of the art which is not considered to be of particular relevance
- "D" document cited by the applicant in the international application
- "E" earlier application or patent but published on or after the international filing date
- "L" document which may throw doubts on priority claim(s) or which is cited to establish the publication date of another citation or other special reason (as specified)
- "O" document referring to an oral disclosure, use, exhibition or other means
- "P" document published prior to the international filing date but later than the priority date claimed
- "T" later document published after the international filing date or priority date and not in conflict with the application but cited to understand the principle or theory underlying the invention
- "X" document of particular relevance; the claimed invention cannot be considered novel or cannot be considered to involve an inventive step when the document is taken alone
- "Y" document of particular relevance; the claimed invention cannot be considered to involve an inventive step when the document is combined with one or more other such documents, such combination being obvious to a person skilled in the art
- "&" document member of the same patent family

| Date of the actual completion of the international search | Date of mailing of the international search report |
|---|---|
| **15 July 2024** | **23 July 2024** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | Telephone No. |

Form PCT/ISA/210 (second sheet) (July 2022)

INTERNATIONAL SEARCH REPORT

International application No.
**PCT/CN2023/133407**

**C. DOCUMENTS CONSIDERED TO BE RELEVANT**

| Category* | Citation of document, with indication, where appropriate, of the relevant passages | Relevant to claim No. |
|---|---|---|
| A | CATT. "R1-2302689, "Physical Layer Signals/Procedures and Higher Layer Protocol for Low-Power WUS"" *3GPP TSG RAN WG1 #112bis-e,* 07 April 2023 (2023-04-07), entire document | 1-51 |
| A | Intel Corporation. "R2-2302977, "Impact of LP-WUR to RRC Idle/Inactive"" *3GPP TSG-RAN WG2 Meeting #121bis-e,* 07 April 2023 (2023-04-07), entire document | 1-51 |

Form PCT/ISA/210 (second sheet) (July 2022)

**INTERNATIONAL SEARCH REPORT**
**Information on patent family members**

International application No.
**PCT/CN2023/133407**

| Patent document cited in search report | | | Publication date (day/month/year) | Patent family member(s) | | | Publication date (day/month/year) |
|---|---|---|---|---|---|---|---|
| US | 2022070766 | A1 | 03 March 2022 | KR | 20210114935 | A | 24 September 2021 |
| | | | | WO | 2020131813 | A1 | 25 June 2020 |
| | | | | EP | 3900442 | A1 | 27 October 2021 |
| WO | 2023039829 | A1 | 23 March 2023 | CN | 117561746 | A | 13 February 2024 |
| CN | 117082587 | A | 17 November 2023 | WO | 2023217010 | A1 | 16 November 2023 |
| WO | 2018063340 | A1 | 05 April 2018 | | None | | |

Form PCT/ISA/210 (patent family annex) (July 2022)